Europäisches Patentamt

European Patent Office

Office européen des brevets

(19)

(11) Veröffentlichungsnummer: **0 128 286**
**B1**

# EUROPÄISCHE PATENTSCHRIFT

(12)

(45) Veröffentlichungstag der Patentschrift:
04.06.86

(21) Anmeldenummer: **84103704.7**

(22) Anmeldetag: **04.04.84**

(51) Int. Cl.⁴: **C 01 B 25/023**

(54) **Vorrichtung zur Herstellung von rotem Phosphor.**

(30) Priorität: **16.04.83 DE 3313929**

(43) Veröffentlichungstag der Anmeldung:
**19.12.84 Patentblatt 84/51**

(45) Bekanntmachung des Hinweises auf die Patenterteilung:
**04.06.86 Patentblatt 86/23**

(84) Benannte Vertragsstaaten:
**DE FR GB IT SE**

(56) Entgegenhaltungen:
**EP - A - 0 015 384**
**EP - A - 0 063 231**
**DE - B - 1 246 590**
**DE - C - 1 164 768**

(73) Patentinhaber: **HOECHST AKTIENGESELLSCHAFT,**
**Postfach 80 03 20, D-6230 Frankfurt am Main 80 (DE)**

(72) Erfinder: **Thümmler, Ursus, Dr., Am Kapellenbusch 27,**
**D-5042 Erftstadt (DE)**
Erfinder: **Werner, Hugo, Brunhildstrasse 11,**
**D-5030 Hürth (DE)**

## Beschreibung

Die vorliegende Erfindung betrifft eine Vorrichtung zur Herstellung von rotem Phosphor durch thermische Umwandlung von geschmolzenem gelbem Phosphor, welche aus einer mit Kugeln gefüllten und mit drehbar gelagerten Wellen versehenen Trommel besteht, wobei mindestens eine Welle eine Hohlwelle ist.

Aus der US-A-4 330 504 ist eine Vorrichtung zur Herstellung von rotem Phosphor bekannt, welche aus einer beheizbaren, mit Kugeln gefüllten und mit drehbar gelagerten Wellen versehenen Trommel besteht, wobei eine Welle eine Hohlwelle ist. An der Hohlwelle ist eine Dosiereinrichtung für flüssigen gelben Phosphor angeordnet, welche aus einem feststehenden gewinkelten Zuführungsrohr für gelben Phosphor besteht, dessen einer Schenkel von einem mit der Kugelmühle verbundenen doppelwandigen drehbaren Rohr umgeben ist. Dabei wird die Abdichtung zwischen dem einen Schenkel und dem drehbaren Rohr durch eine Stopfbuchse bewirkt. Am an der Drehtrommel befindlichen Ende des drehbaren Rohres befindet sich ein Ventil, welches mit Hilfe einer Dosierstange, die das drehbare Rohr sowie den einen Schenkel des Zuführungsrohres durchdringt und durch einen Kolben betätigbar ist, geschlossen und geöffnet werden kann. Ein Teil des doppelwandigen drehbaren Rohres wird von zwei Faltenbälgen gebildet, welche konzentrisch zur Dosierstange mit Abstand voneinander angeordnet sind, wodurch der Hub der Dosierstange kompensiert wird.

Die zum Dosieren von flüssigem gelbem Phosphor in eine rotierende Kugelmühle zur Herstellung von rotem Phosphor geeignete Einrichtung nach der DE-A-3 113 705 besteht aus einem feststehenden äusseren Rohr, in welchem ein inneres Rohr drehbar gelagert ist. In das der Kugelmühle zugewandte Ende des inneren Rohres ist ein Ventil mit Ventilstange eingesetzt. In das andere Ende des inneren Rohres ist ein Stopfen eingesetzt, welcher mit einer zentrischen Bohrung zur Durchführung der Ventilstange versehen ist. Dabei ist die Ventilstange innerhalb des inneren Rohres teilweise von einem Faltenbalg umhüllt, welcher mit dem Stopfen und mit der Ventilstange dichtschliessend verbunden ist.

Nachteilig ist bei der zuerst genannten Vorrichtung, dass bei der bei ihr verwendeten Dosiereinrichtung während des Betriebes die Faltenbälge neben ihrer Beanspruchung auf Dilatation und Kompression auch auf Torsion beansprucht werden. Dadurch wird ihre Standzeit erheblich herabgesetzt, wobei es bei einem Defekt am inneren Faltenbalg zur unerwünschten Vermischung des Warmwassers mit gelbem Phosphor kommt.

Bei der zuletzt genannten Dosiereinrichtung ist von Nachteil, dass sie konstruktiv sehr aufwendig ist und dass wegen der Vielzahl der bei ihr verwendeten Radial-Wellendichtringen und Stoffbuchsen Dichtheitsschwierigkeiten auftreten.

Es ist daher Aufgabe der vorliegenden Erfindung, eine Vorrichtung zur Herstellung von rotem Phosphor durch thermische Umwandlung von geschmolzenem gelbem Phosphor in einer mit Kugeln gefüllten und mit drehbar gelagerten Hohlwellen versehenen Trommel anzugeben, bei welcher zur Einbringung des gelben Phosphors in die Trommel eine relativ einfache Einrichtung dient und bei welcher darüber hinaus die Vermischung von Wasser mit gelbem Phosphor ausgeschlossen ist. Das wird erfindungsgemäss dadurch erreicht, dass an die erste Hohlwelle und an die zweite Hohlwelle je eine Drehdurchführung dichtschliessend angesetzt ist; dass die Drehdurchführungen mit je einer im Boden verankerten Verdrehsicherung versehen sind; dass die erste Drehdurchführung von einem feststehenden Rohr durchdrungen ist, wobei das Rohr auch die erste Hohlwelle durchdringt und etwa an ihrer Einmündung in die Trommel offen endet; dass die zweite Drehdurchführung von einem feststehenden, einseitig verschlossenen Rohr durchdrungen ist; wobei das Rohr auch die zweite Hohlwelle durchdringt und mit seiner verschlossenen Seite etwa an der Einmündung der zweiten Hohlwelle in die Trommel endet; und dass in eine seitliche Öffnung in der Drehdurchführung ein Druckaufnehmer eingesetzt ist.

Die Vorrichtung gemäss der Erfindung kann weiterhin wahlweise auch noch dadurch weitergebildet sein, dass

a) das Rohr an seinem ausserhalb von Drehdurchführung und erster Hohlwelle befindlichen Ende ein Kugelventil trägt;

b) in das Rohr zwischen der Drehdurchführung und dem Kugelventil eine Zuführungsleitung für gelben Phosphor einmündet;

c) in der Zuführungsleitung ein Faltenbalg angeordnet ist;

d) das einseitig verschlossene Rohr an seinem ausserhalb der Drehdurchführung befindlichen offenen Ende einen Anschlusskopf aufweist;

e) vom Anschlusskopf eine zu einer Temperaturanzeigeeinrichtung TR führende Leitung abgeht;

f) vom Druckabnehmer eine zu einer Druckanzeigeeinrichtung PR führende Leitung abgeht.

Bei der erfindungsgemässen Vorrichtung können Drehdurchführungen verwendet werden, wie sie beispielsweise aus der DE-C-1 164 768 bekannt sind.

Bei der Vorrichtung gemäss der Erfindung muss das feststehende Rohr, welches die Drehdurchführung und die erste Hohlwelle durchdringt sowie zum Einbringen des gelben Phosphors in die Trommel dient, nach einer gewissen Betriebszeit verfahrensbedingt gereinigt werden. Zu diesem Zweck wird nach Schliessen der Zuführungsleitung für gelben Phosphor bei drucklosem System nach Öffnen des Kugelventils eine Stange mit daran befestigtem Reinigungswerkzeug in und durch das Rohr geschoben.

Bei der erfindungsgemässen Vorrichtung ist durch die Anwendung einer Drehdurchführung mit feststehendem, einseitig geschlossenem Rohr die Messung der Innentemperatur und des Innendruckes der rotierenden Trommel mit Fernübertragung in einfacher Weise möglich.

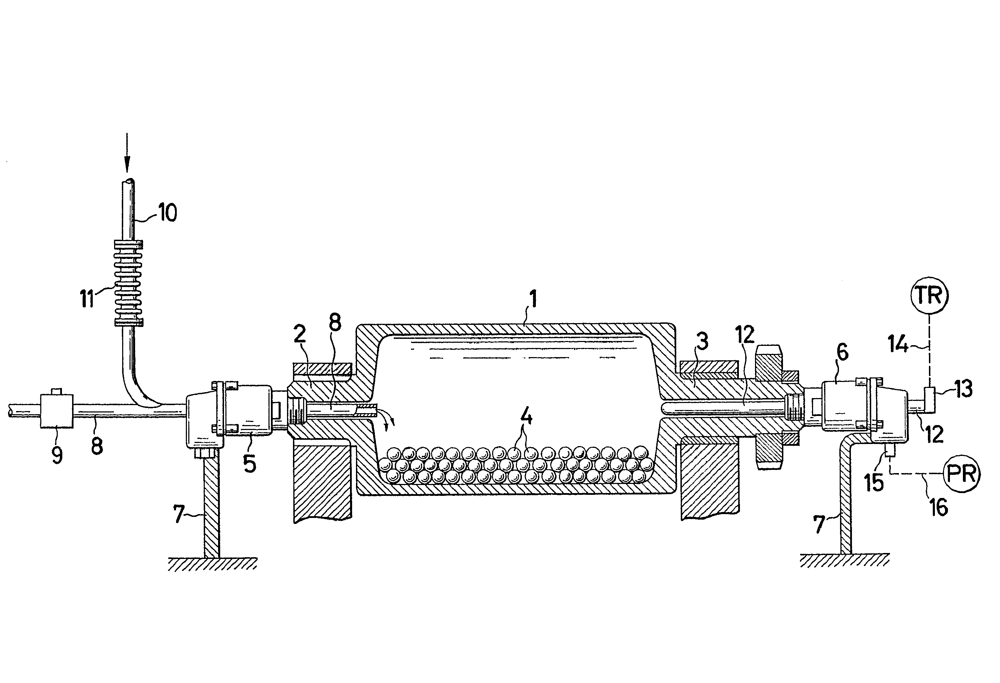

In der beigefügten Zeichnung ist die Vorrichtung gemäss der Erfindung schematisch und im Schnitt dargestellt.

Eine Trommel 1 ist mit einer ersten Hohlwelle 2 und einer zweiten Hohlwelle 3 versehen sowie mit Eisenkugeln 4 gefüllt. In die Hohlwellen (2, 3) sind Drehdurchführungen (5, 6) dichtschliessend eingesetzt. Jede Drehdurchführung (5, 6) ist mit einer im Boden verankerten Verdrehsicherung 7 versehen.

Die Drehdurchführung 5 ist von einem feststehenden Rohr 8 durchdrungen, welches auch die erste Hohlwelle 2 durchdringt und etwa an ihrer Einmündung in die Trommel 1 offen endet. Das entgegengesetzte Ende des Rohres 8 trägt ausserhalb der Drehdurchführung 5 ein Kugelventil 9. Zwischen Drehdurchführung 5 und Kugelventil 9 mündet in das Rohr 8 eine Zuführungsleitung 10 für gelben Phosphor ein, in welcher ein Faltenbalg 11 angeordnet ist.

Die Drehdurchführung 6 ist von einem feststehenden, einseitig verschlossenen Rohr 12 durchdrungen, welches auch die zweite Hohlwelle 3 durchdringt und mit seiner verschlossenen Seite etwa an der Einmündung der zweiten Hohlwelle 3 in die Trommel 1 endet. Das einseitig verschlossene Rohr 12 dient als Messtasche für Thermoelemente und weist an seinem ausserhalb der Drehdurchführung 6 befindlichen offenen Ende einen Anschlusskopf 13 auf, von welchem eine Leitung 14 zu einer Temperaturanzeigeeinrichtung TR abgeht. Schliesslich ist in eine senkrecht zum einseitig verschlossenen Rohr 12 verlaufende Öffnung in der Drehdurchführung 6 ein Druckaufnehmer 15 eingesetzt. Auf den Druckaufnehmer 15 wirkt der in der Trommel 1 herrschende Druck über den Ringraum ein, welcher zwischen dem Rohr 12 einerseits sowie dem zentrischen Hohlraum in der Drehdurchführung 6 und der zweiten Hohlwelle 3 andererseits gebildet ist. Von dem Druckaufnehmer 15 geht eine zu einer Druckanzeigeeinrichtung PR führende Leitung 16 ab.

## Patentansprüche

1. Vorrichtung zur Herstellung von rotem Phosphor durch thermische Umwandlung von geschmolzenem gelbem Phosphor, bestehend aus einer mit Kugeln gefüllten und mit drehbar gelagerten Wellen versehenen Trommel, wobei mindestens eine Welle eine Hohlwelle ist, dadurch gekennzeichnet, dass an die erste Hohlwelle (2) und an die zweite Hohlwelle (3) je eine Drehdurchführung (5, 6) dichtschliessend angesetzt ist; dass die Drehdurchführungen (5, 6) mit je einer im Boden verankerten Verdrehsicherung (7) versehen sind; dass die Drehdurchführung (5) von einem feststehenden Rohr (8) durchdrungen ist, wobei das Rohr (8) auch die erste Hohlwelle (2) durchdringt und etwa an ihrer Einmündung in die Trommel (1) offen endet; dass die Drehdurchführung (6) von einem feststehenden, einseitig verschlossenen Rohr (12) durchdrungen ist, wobei das Rohr (12) auch die zweite Hohlwelle (3) durchdringt und mit seiner verschlossenen Seite etwa an der Einmündung der zweiten Hohlwelle (3) in die Trommel (1) endet; und dass in eine seitliche Öffnung in der Drehdurchführung (6) ein Druckaufnehmer (15) eingesetzt ist.

2. Vorrichtung nach Anspruch 1, dadurch gekennzeichnet, dass das Rohr (8) an seinem ausserhalb von Drehdurchführung (5) und erster Hohlwelle (2) befindlichen Ende ein Kugelventil (9) trägt.

3. Vorrichtung nach Anspruch 1 oder 2, dadurch gekennzeichnet, dass in das Rohr (8) zwischen der Drehdurchführung (5) und dem Kugelventil (9) eine Zuführungsleitung (10) für gelben Phosphor einmündet.

4. Vorrichtung nach Anspruch 3, dadurch gekennzeichnet, dass in der Zuführungsleitung (10) ein Faltenbalg (11) angeordnet ist.

5. Vorrichtung nach einem der Ansprüche 1 bis 4, dadurch gekennzeichnet, dass das einseitig verschlossene Rohr (12) an seinem ausserhalb der Drehdurchführung (6) befindlichen offenen Ende einen Anschlusskopf (13) aufweist.

6. Vorrichtung nach Anspruch 5, dadurch gekennzeichnet, dass vom Anschlusskopf (13) eine zu einer Temperaturanzeigeeinrichtung TR führende Leitung (14) abgeht.

7. Vorrichtung nach einem der Ansprüche 1 bis 6, dadurch gekennzeichnet, dass vom Druckabnehmer (15) eine zu einer Druckanzeigeeinrichtung PR führende Leitung (16) abgeht.

## Claims

1. Apparatus for making red phosphorus by subjecting molten yellow phosphorus to a thermal conversion reaction, comprised of a drum filled with balls and provided with rotatably mounted shafts of which at least one is a hollow shaft, characterized in that a rotatable feed duct (5, 6) is tightly connected to each of the first hollow shaft (2) and second hollow shaft (3); in that a floor-anchored torque-supporting means (7) is secured to each of the two rotatable feed ducts (5, 6); in that a stationary tube (8) is passed through the feed duct (5) and also through the first hollow shaft (2), the tube (8) terminating with its open end at a point where the first hollow shaft (2) opens into the drum (1); in that a stationary tube (12) closed at one of its ends is passed through the rotatable feed duct (6) and also through the second hollow shaft (3), the tube (12) terminating with its closed end at a point where the second hollow shaft (3) opens into the said drum (1); and in that a pressure-receiving means (15) is mounted in a lateral opening provided in the rotatable feed duct (6).

2. Apparatus as claimed in claim 1, wherein the tube (8) has a ball valve (9) secured to its end protruding outwardly from the rotatable feed duct (5) and first hollow shaft (2).

3. Apparatus as claimed in claim 1 or 2, wherein a yellow phosphorus feed pipe (10) opens into the tube (8) between the rotatable feed duct (5) and ball valve (9).

4. Apparatus as claimed in claim 3, wherein a bellows (11) is provided in the feed pipe (10).

5. Apparatus as claimed in any one of claims 1 to 4, wherein the stationary tube (12) closed at one of its ends has a terminal head (13) secured to its open end protruding outwardly from the rotatable feed duct (6).

6. Apparatus as claimed in claim 5, wherein the terminal head (13) is provided with a line (14) running to a temperature-indicating means TR.

7. Apparatus as claimed in any one of claims 1 to 6, wherein the pressure-receiving means (15) is provided with a line (16) running to a pressure-indicating means PR.

## Revendications

1. Appareillage pour la production de phosphore rouge par conversion thermique de phosphore blanc fondu, constitué par un tambour rempli de billes et muni d'arbres montés en rotation, dont l'un au moins est un arbre creux, caractérisé en ce qu'un passage tournant (5, 6) fermant hermétiquement est relié chaque fois au premier arbre creux (2) et au second arbre creux (3); en ce que chacun des passages tournants (5, 6) est pourvu d'une sécurité contre la torsion (7) ancrée dans le sol; en ce que le passage tournant (5) est traversé par un tube stationnaire (8) passant également par le premier arbre creux (2) et se terminant à extrémité ouverte à peu près à l'endroit où le premier arbre creux (2) débouche dans le tambour (1); en ce que le passage tournant (6) est traversé par un tube stationnaire (12) fermé à une extrémité passant également par le second arbre creux (3) et se terminant, à son extrémité fermée, à peu près à l'endroit où le second arbre creux (3) débouche dans le tambour (1); et en ce qu'un élément d'absorption de la pression (15) est disposé dans une ouverture latérale ménagée dans le passage de traversée tournant (6).

2. Appareillage selon la revendication 1, caractérisé en ce que le tube (8) porte une soupape à bille (9) à son extrémité se trouvant à l'extérieur du passage tournant (5) et du premier arbre creux (2).

3. Appareillage selon la revendication 1 ou 2, caractérisé en ce qu'une conduite d'amenée de phosphore blanc (10) débouche dans le tube (8) entre le passage tournant (5) et la soupape à bille (9).

4. Appareillage selon la revendication 3, caractérisé en ce qu'un soufflet (11) est disposé dans la conduite d'amenée (10).

5. Appareillage selon l'une des revendications 1 à 4, caractérisé en ce que le tube (12) fermé à une extrémité présente une tête de raccordement (13) à son extrémité ouverte se trouvant en dehors du passage tournant (6).

6. Appareillage selon la revendication 5, caractérisé en ce que la tête de raccordement (13) est munie d'une conduite (14) conduisant à un indicateur de température TR.

7. Appareillage selon l'une des revendications 1 à 6, caractérisé en ce que l'élément d'absorption de la pression (15) est muni d'une conduite (16) conduisant à un indicateur de pression PR.